# EUROPÄISCHE PATENTSCHRIFT

(11) **EP 2 794 380 B1**
(45) Veröffentlichungstag und Bekanntmachung des Hinweises auf die Patenterteilung: **29.04.2020**
(21) Anmeldenummer: 12808724.4
(22) Anmeldetag: 07.12.2012
(51) Int. Cl.: B60W 40/02, B60S 1/08, G01W 1/14

(54) **OPTISCHER SENSOR MIT EINEM INTEGRIERTEN FEUCHTSENSOR**
OPTICAL SENSOR WITH AN INTEGRATED MOISTURE SENSOR
CAPTEUR OPTIQUE AVEC CAPTEUR D'HUMIDITÉ INTÉGRÉ

(30) Priorität: 24.12.2011 DE 102011122456
(43) Veröffentlichungstag der Anmeldung: 29.10.2014
(73) Patentinhaber: Valeo Schalter und Sensoren GmbH, 74321 Bietigheim-Bissingen (DE)
(72) Erfinder: FELBER, Franz, 86681 Fuenfstetten (DE); BRUNNER, Erhard, 86720 Nordlingen-Lopfingen (DE)
(74) Vertreter: Pothmann, Karsten
(86) Internationale Anmeldenummer: PCT/EP2012/074799
(87) Internationale Veröffentlichungsnummer: WO 2013/092254

(56) Entgegenhaltungen:
- DE-A1-102006 035 184
- DE-A1-102006 060 547
- DE-A1-102006 060 548
- JP-A- 2007 227 520
- US-A1- 2007 044 542

## Beschreibung

Die Erfindung betrifft einen optischen Sensor für ein Kraftfahrzeug, mit einem optischen Sensor zur Erfassung der Benetzung einer Windschutzscheibe des Kraftfahrzeugs und/oder zur Erfassung des Umgebungslichts des Kraftfahrzeugs. Des Weiteren betrifft die Erfindung eine Fahrerassistenzeinrichtung mit einem derartigen optischen Sensor als auch ein Kraftfahrzeug mit einem derartigen optischen Sensor.

Mittels derartigen optischen Sensoren, die insbesondere an einer inneren Seite einer Windschutzscheibe eines Kraftfahrzeugs angeordnet sind, wird auftreffender Regen detektiert und abhängig davon beispielsweise eine Scheibenwischeranlage eines Kraftfahrzeugs automatisch eingeschaltet. Solche Sensoren werden auch als Regenlichtsensoren einer Fahrerassistenzeinrichtung ausgebildet, um zusätzlich die Beleuchtung des Kraftfahrzeugs anzusteuern.

Um eine bessere Funktionsweise des optischen Sensors zu gewährleisten und Fehlverhalten zu vermeiden, werden neuerdings solche optischen Sensoren mit einem Feuchtsensor kombiniert. Letzterer ermöglicht den Feuchtzustand an der inneren Seite der Windschutzscheibe sowie ggf. auch die Temperatur im inneren des Kraftfahrzeugs zu messen. Mit Hilfe von diesen zusätzlichen Werten kann genauer den Benetzungszustand auf der Windschutzscheibe ermittelt werden.

In der DE 10 2006 060 548 A1 ist beispielsweise eine optoelektronische Regensensoreinheit für Kraftfahrzeuge beschrieben, mit einem optischen Sensor zur Erfassung der Benetzung einer Kraftfahrzeugscheibe, wobei der optische Sensor, an der Kraftfahrzeugscheibe anliegend, im Bereich des von einem Scheibenwischer überwischten Bereichs auf der dem Kraftfahrzeuginnern zugewandten Seite montierbar ist. Die Einheit weist ein den optischen Sensor im von der Kraftfahrzeugscheibe abgewandten Bereich umschließenden Gehäuse mit einer elektrischen Anbindung an die Elektrik des Kraftfahrzeuges auf. Zusätzlich ist ein Temperatur- und Luftfeuchtesensormodul mit dem Gehäuse verbunden, wobei die elektrische Versorgung des Temperatur- und Luftfeuchtesensormoduls über die elektrische Anbindung des optischen Sensors erfolgt.

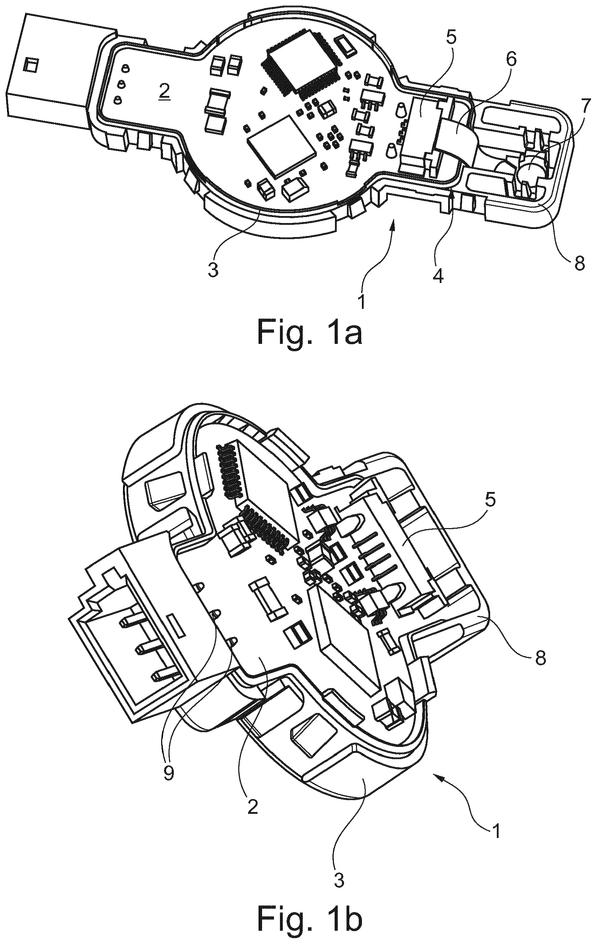

In Fig. 1a und 1b sind Ansichten einer schematischen Darstellung eines bekannten Regensensors 1 gezeigt. Beide Ansichten auf Fig. 1a und 1b zeigen eine Leiterplatte 2 des Regensensors 1 mit elektronischen Komponenten bestückt und von dem einen Teil eines Gehäuses 3 getragen. An einem Ende 4 der Leiterplatte 2 befindet sich eine Befestigung 5 mit elektrischem Anschluss für eine zusätzliche flexible Leiterplatte 6, die zu einem Feuchtsensor 7 in einem gesonderten Abschnitt 8 des Gehäuses 3 führt. An dem entgegengesetzten Ende der Leiterplatte 2 befinden sich drei Löcher in den jeweils eine elektrisch leitende Stiftleiste 9 kraftschlüssig einrastet. Diese Stiftleiste 9 dienen zur elektrischen Kontaktierung der Leiterplatte 2 d.h. des Regensensors 1 mit der Elektrik des Kraftfahrzeugs. Fig. 1b zeigt insbesondere der indirekte Steckverbinder, der aus den frei liegenden Ende der Stifleisten 9 und den aus dem Gehäuse 3 gebildeten Einbaustecker.

Nachteilig an einem solchen Sensor sind die viele Schritte bei der Herstellung, die benötigt werden, um einerseits den Feuchtsensor an dem Regensensor anzubringen und andererseits den Einbaustecker zu fertigen.

Es ist Aufgabe der vorliegende Erfindung, einen optischen Sensor für Kraftfahrzeuge sowie eine Fahrerassistenzeinrichtung mit einem derartigen optischen Sensor als auch ein Kraftfahrzeug mit einem derartigen optischen Sensor zu schaffen, der in minimierten Schritten hergestellt werden kann.

Diese Aufgabe wird durch einen optischen Sensor, eine Fahrerassistenzeinrichtung und ein Kraftfahrzeug gemäß den Ansprüchen 1, 6 und 7 gelöst.

Ein erfindungsgemäßer optischer Sensor für ein Kraftfahrzeug umfasst zumindest einen optischen Sensor zur Erfassung der Benetzung einer Windschutzscheibe und/oder zur Erfassung des Umgebungslichts des Kraftfahrzeugs. Der optische Sensor ist auf einer Hauptplatine angebracht und anliegend an der inneren Seite der Windschutzscheibe montierbar vorzugsweise im Bereich des von einem Scheibenwischer überwischten Bereichs. Zudem weist der optische Sensor einen Feuchtsensor zur Erfassung der Feuchtigkeit und/oder Temperatur der inneren Seite der Windschutzscheibe. Der Feuchtsensor ist an einem Ende einer Leiterplatte angebracht und im montierten Zustand gegen die innere Seite der Windschutzscheibe gedrückt. Dabei ist der Feuchtsensor mit dem optischen Sensor elektrisch gekoppelt und in einem gemeinsamen Gehäuse mit dem optischen Sensor teilweise umschlossen. Das dem Feuchtsensor tragende Ende der Leiterplatte besteht aus einer starr-flexible Leiterplatte, die einteilig mit der Hauptplatine des optischen Sensors gebildet ist. Durch eine derartige Ausgestaltung der Hauptplatine mit dem einen starr-flexiblen Ende auf dem der Feuchtsensor montiert ist, verringert sich Vorteilhafterweise die Anzahl der benötigten unterschiedlichen Herstellungsschritte. Zudem kann die Bauweise des Gehäuses um der Hauptplatine besser angepasst werden, was zu einer optimierten und stabileren Miniaturisierung des optischen Sensors führt.

Erfindungsgemäß ist vorgesehen, dass das starr-flexible Ende aus der Hauptplatine herstellbar ist. Dies kann erreicht werden, in dem z.B. gewisse Schichten der Hauptplatine an diesem Ende entsprechend weggefräst werden, so dass das übrig gebliebene Material eine gewisse Flexibilität entlang hauptsächlich einer Achse senkrecht zur Hauptplatine aufweist. Andere Herstellungsverfahren können hier auch angewendet werden, wie z.B. die Verwendung von Chemikalien zum wegätzen von den Schichten oder auch die Anwendung eines optischen Verfahrens (Laser, usw.).

Die Hauptplatine des optischen Sensors weist darüber hinaus auf dem des Feuchtsensors abgewandten Ende ein mit der Hauptplatine einteiliges steckerförmiges Ende zur elektrischen Direktkontaktierung des optischen Sensors auf. Dieses Ende der Hauptplatine kann gleich bei der Herstellung der Hauptplatine in der Art von Leiterbahnen gestaltet werden. Diese Leiterbahnen ersetzten die üblichen Stiften und bilden somit einen direkten Steckverbinder. Die Leiterbahnen sind von dem Gehäuse so umhüllt, dass daraus ein Einbaustecker entsteht.

Das Gehäuse kann Vorteilhafterweise zweiteilig gebildet sein. Der eine Teil ist entsprechend gestaltet, dass die Hauptplatine mit dem Feuchtsensor darin eingebettet werden kann. Zudem kann es stabiler sein den Einbaustecker einteilig mit diesem Teil des Gehäuses zu gestalten. Der zweite Teil des Gehäuses, der die Optik des Sensors schützt und Bereiche aufweist, die für die verwendete optische Strahlung durchlässig sind, kann mit dem ersten Teil geklebt, geschraubt oder einfach zusammen geklemmt werden. Letztere kann mit eingebauten Einrastzungen auf der eine Seite und Einrastungen auf der anderen Seite erzielt werden. Dabei können die zwei Teile des Gehäuses durch Spritzgussverfahren hergestellt werden.

Vorteilhafterweise ist das eine Ende der Hauptplatine mit dem Feuchtsensor über eine Feder auf dem Gehäuse nach außen gestützt. Somit kann das Ende der Hauptplatine mit dem Feuchtsensor im montierten Zustand optimal gegen die Windschutzscheibe gedrückt werden.

Des Weiteren betrifft die Erfindung eine Fahrerassistenzeinrichtung mit einem erfindungsgemäßen optischen Sensor oder einer vorteilhaften Ausgestaltung davon. Die Erfindung betrifft darüber hinaus auch ein Kraftfahrzeug mit einem erfindungsgemäßen optischen Sensor oder einer vorteilhaften Ausgestaltung davon, wobei der optische Sensor zur Erfassung der Benetzung einer Windschutzscheibe des Kraftfahrzeugs und/oder zur Erfassung des Umgebungslichts des Kraftfahrzeugs ausgebildet ist. Vorzugsweise ist der optische Sensor an der inneren Seite der Windschutzscheibe angeordnet.

Weitere Merkmale der Erfindung ergeben sich aus den Ansprüchen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1a, 1b: zwei perspektivische Darstellung eines aus dem Stand der Technik bekannten Regensensors;
- Fig. 2: eine perspektivische Darstellung eines Ausführungsbeispiels eines erfindungsgemäßen optischen Sensors;
- Fig. 3: eine perspektivische Darstellung des Ausführungsbeispiels nach Fig. 2 von unten;
- Fig. 4: eine perspektivische Darstellung des Ausführungsbeispiels nach Fig. 2 mit einem Gehäuse.

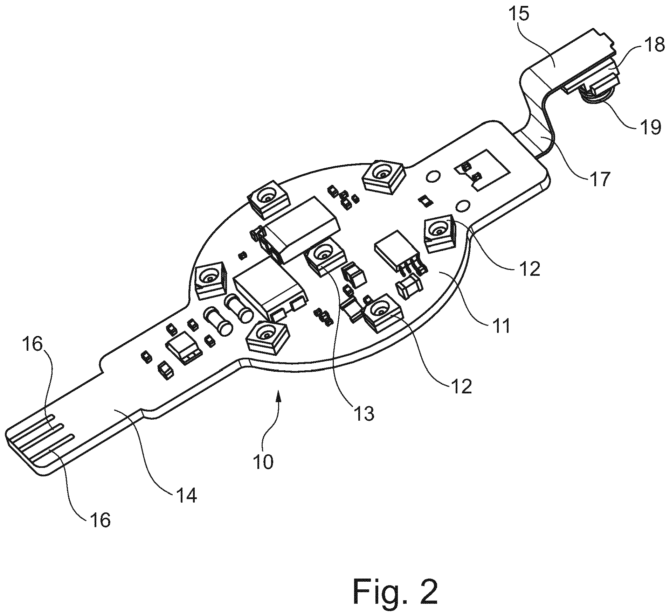

In Fig. 2 ist in einer perspektivischen Darstellung eine Hauptplatine 10 eines optischen Sensors für ein Kraftfahrzeug gezeigt. Es ist dort die eine Oberseite der Hauptplatine 10 gezeigt, die gegen die innere Fläche der Windschutzscheibe eines Kraftfahrzeugs im montierten Zustand des optischen Sensors platziert ist. Die Hauptplatine 10 weist einen mittleren Bereich 11 auf dem elektronische Komponenten angebracht sind, unter anderem optische Sendeeinheiten 12 entlang einem äußeren Kreis und mittig hierzu eine optische Empfängereinheit 13. Aus den optischen Sendeeinheiten 12 werden optische Strahlen zu der Windschutzscheibe gesendet, deren Reflektionen ggf. von der optischen Empfängereinheit 13 gemessen werden kann. Der Benetzungszustand der äußeren Fläche der Windschutzscheibe wird die Eigenschaft der Reflektionen stark beeinflussen. Nach geeigneter Eichung kann aus der Messung unterschiedlichen reflektierten optischen Strahlen den Benetzungszustand abgeschätzt werden.

Die Hauptplatine 10 des optischen Sensors weist zudem zwei entgegen gesetzte Ende 14, 15, die Einteilig mit dem mittleren Bereich 11 gebildet sind. Das eine Ende 14 weist drei Leiterbahnenabschnitte 16, die einen direkten Steckverbinder der Hauptplatine 10 bilden. Im montierten Zustand ist der optische Sensor über diese Leiterbahnen 16 elektrisch an der Stromversorgung des Kraftfahrzeugs angeschlossen. Des Weiteren werden die gemessenen Daten über diese Leiterbahnen 16 an einem Kontroller übertragen. Diese Daten können in Abhängigkeit der bemessenen Benetzung der Windschutzscheibe eine Scheibenwischeranlage aktivieren ggf. die Geschwindigkeit des Scheibenwischvorgang beeinflussen. Zudem oder alternativ hierzu können diese Daten in einer Fahrerassistenzeinrichtung eingespeist werden, um z.B. die Beleuchtung des Kraftfahrzeugs anzusteuern und/oder den Bremsvorgang zu beeinflussen.

Das zu dem direkten Steckverbinder entgegen gesetzte Ende 15 der Hauptplatine 10 weist einen starr-flexiblen Abschnitt 17. Dieser Abschnitt 17, der zwar einteilig mit der Hauptplatine 10 gebildet ist, besteht aus einem flexiblen Material. Dadurch ist es möglich den Teilbereich des Ende 15 unter dem ein Feuchtsensor 18 angebracht ist, auf eine höhere Ebene als die durch den mittleren Bereich 11 der Hauptplatine 10 definierte Ebene einzustellen. Der flexible Abschnitt 17 kann direkt aus der Hauptplatine 10 unter Verwendung unterschiedlichen Herstellungsverfahren gewonnen werden. Hierfür kann z.B. eine bestimmte Schichtdicke herausgefräst oder weggeätzt werden, bis dieser Abschnitt 17 die gewünschte Flexibilität aufweist. In Fig. 2 ist eine Feder 19 unterhalb des Feuchtsensors 18 zu sehen. Diese Feder dient dazu den Feuchtsensor 18 über das Ende 15 der Hauptplatine 10 aus dem Gehäuse gegen die Windschutzscheibe im montierten Zustand zu drücken. Die Feder selbst stützt sich dabei auf dem Gehäuse des optischen Sensors.

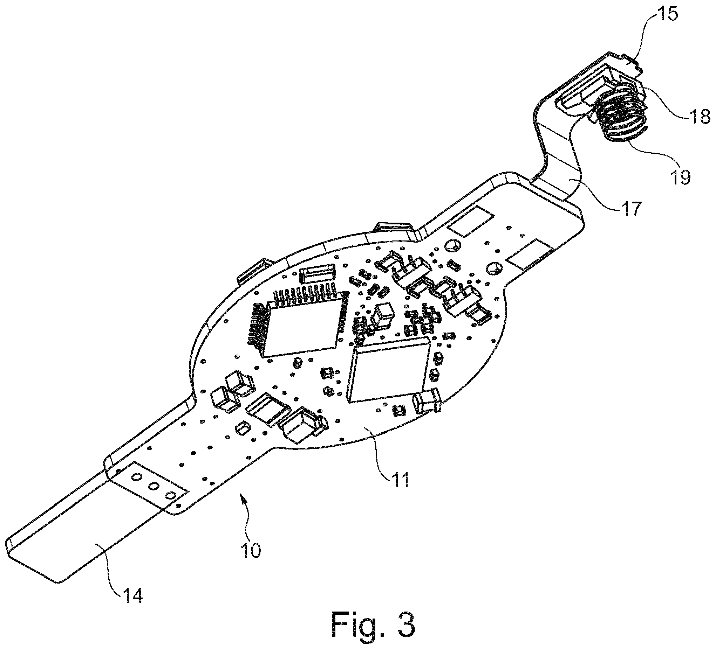

In Fig. 3 ist in einer perspektivischen Darstellung die Hauptplatine 10 im Vergleich zu der perspektivischen Darstellung in Fig. 2 von unten gezeigt. Dabei sind in dem mittleren Bereich 11 andere elektronische Komponenten zu sehen, die für die Funktionsweise des optischen Sensors benötigt werden. Es kann sogar vorgesehen werden ein Kontroller in dem optischen Sensor mitzuintegrieren. Zudem sind die beide Ende 14 und 15 der Hauptplatine von unten zu sehen. Bei dem einen Ende 15 mit dem flexiblen Bereich 17 sind der Feuchtsensor 18 und die Feder 19 abgebildet.

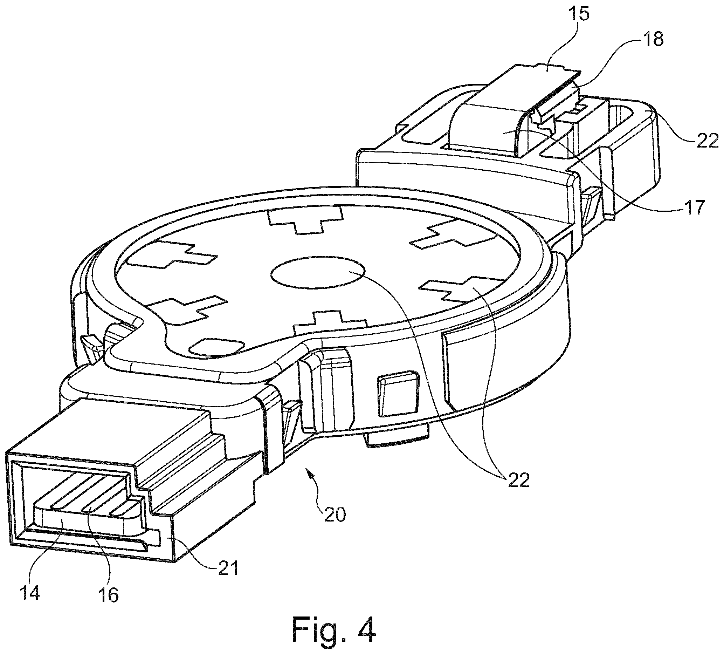

In Fig. 4 ist in einer perspektivischen Darstellung der optische Sensor mit dem Gehäuse 20 um die Hauptplatine 10 gezeigt. Dieses Gehäuse 20 kann zweiteilig gebildet werden, wobei vom Vorteil sein kann, dass zumindest das eine Ende 21 um das Ende 14 der Hauptplatine 10 mit den als Steckverbinder dienenden Leiterbahnenabschnitte 16 einteilig zu gestalten. Somit kann dieses Ende 21 des Gehäuses 20 einen stabileren Einbaustecker bilden. In Fig. 4 sind Bereiche 22 des Gehäuses 20 im Kreis sowie in der Mitte verteilt, die für optische Strahlungen des optischen Sensors durchlässig sind. Diese Bereiche 22 werden üblicherweise in einer anderen Zusammensetzung als den restlichen Teil des Gehäuses 20 gebildet. Im entgegen gesetzten Ende zu dem Einbaustecker befindet sich das Ende 15 mit dem flexibleren Abschnitt 17 und dem Feuchtsensor 18, das aus dem Gehäuseabschnitt 22 dank der Feder (in Fig. 4 im Gehäuseabschnitt 22 versteckt) herausragt. Das Ende 15 wird im montierten Zustand gegen die Windschutzscheibe eines Kraftfahrzeugs gedrückt, und ermöglicht somit die Feuchtigkeit ggf. auch die Temperatur im inneren des Kraftfahrzeugs zu messen. Mit Hilfe diesen Zusätzlichen Daten kann die Benetzung der Windschutzscheibe besser festgestellt werden und andere Situationen gemessen werden.

## Patentansprüche

1. Optischer Sensor für Kraftfahrzeuge, mit einem optischen Sensor zur Erfassung der Benetzung einer Windschutzscheibe des Kraftfahrzeugs und/oder zur Erfassung des Umgebungslichts des Kraftfahrzeugs, wobei der optische Sensor auf einer Hauptplatine (10) angebracht ist, die anliegend an der inneren Seite der Windschutzscheibe montierbar ist, und mit einem Feuchtsensor (18) zur Erfassung der Feuchtigkeit und/oder Temperatur der inneren Seite der Windschutzscheibe, wobei der Feuchtsensor (18) an einem Ende einer Leiterplatte angebracht ist und im montierten Zustand gegen die innere Seite der Windschutzscheibe gedrückt ist, wobei der Feuchtsensor (18) mit dem optischen Sensor elektrisch gekoppelt ist und in einem gemeinsamen Gehäuse mit dem optischen Sensor teilweise umschlossen ist,
**dadurch gekennzeichnet,**
**dass** das dem Feuchtsensor tragende Ende (15) der Leiterplatte eine starr-flexible Leiterplatte ist, die einteilig mit der Hauptplatine (10) des optischen Sensors gebildet ist und einen flexiblen Abschnitt (17) aufweist, und dass das starr-flexible Ende (15) aus der Hauptplatine (10) herstellbar ist, indem Schichten der Hauptplatine (10) an diesem Ende entsprechend weggefräst oder durch Verwendung von Chemikalien weggeätzt oder durch Anwendung eines optischen Verfahrens entfernt sind, so dass das übrig gebliebene Material eine gewisse Flexibilität entlang hauptsächlich einer Achse senkrecht zur Hauptplatine (10) aufweist.

2. Optischer Sensor nach Anspruch 1, **dadurch gekennzeichnet, dass** die Hauptplatine des optischen Sensors auf dem des Feuchtsensors abgewandten Ende einen mit der Hauptplatine einteiligen direkten Steckverbinder zur elektrischen Kontaktierung des optischen Sensors an die Elektrik des Kraftfahrzeuges aufweist.

3. Optischer Sensor nach Anspruch 1, **dadurch gekennzeichnet, dass** das gemeinsame Gehäuse zweiteilig gebildet ist.

4. Optischer Sensor nach Anspruch 3, **dadurch gekennzeichnet, dass** das gemeinsame Gehäuse im Spritzgussverfahren herstellbar ist.

5. Optischer Sensor nach Anspruch 1, **dadurch gekennzeichnet, dass** der Feuchtsensor (18) mit Hilfe einer Feder (19) auf dem Gehäuse gestützt über die Leiterplatte im montierten Zustand gegen die innere Windschutzscheibe gedrückt ist.

6. Fahrerassistenzeinrichtung mit einem optischen Sensor (1) nach einem der vorhergehenden Ansprüche.

7. Kraftfahrzeug mit einem optischen Sensor nach einem der vorhergehenden Ansprüche 1 bis 5, wobei der optischen Sensor zur Erfassung der Benetzung der Windschutzscheibe des Kraftfahrzeugs und/oder zur Erfassung der Umgebungslicht des Kraftfahrzeugs ausgebildet ist, insbesondere der optischen Sensor an der inneren Seite der Windschutzscheibe angeordnet ist.

## Claims

1. Optical sensor for motor vehicles having an optical sensor for detecting the wetting of a windscreen of the motor vehicle and/or for detecting the ambient light of the motor vehicle, wherein the optical sensor is attached to a main circuit board (10) that can be mounted lying on the inner face of the windscreen, and having a moisture sensor (18) for detecting the moisture and/or temperature on the inner face of the windscreen, wherein the moisture sensor (18) is attached to one end of a circuit board and in the mounted state is pressed against the inner face of the windscreen, wherein the moisture sensor (18) is electrically coupled to the optical sensor and is enclosed in part in a common housing having the optical sensor,
**characterized**
**in that** the end (15) of the circuit board that is supporting the moisture sensor is a rigid-flexible circuit board that is formed as one piece with the main circuit board (10) of the optical sensor and has a flexible section (17), and in that the rigid-flexible end (15) can be produced from the main circuit board (10) in that, for example, layers of the main circuit board (10) are, at this end, accordingly milled away or etched away through the use of chemicals or removed through the use of an optical method, so that the remaining material has a particular flexibility along mainly an axis that is perpendicular with respect to the main circuit board (10).

2. Optical sensor according to Claim 1, **characterized in that** the main circuit board of the optical sensor comprises on the end that is remote from the moisture sensor a direct plug connector that is formed as one piece with the main circuit board for providing the electrical contact between the optical sensor and the electrical system of the motor vehicle.

3. Optical sensor according to Claim 1, **characterized in that** the common housing is embodied in two parts.

4. Optical sensor according to Claim 3, **characterized in that** the common housing can be manufactured by means of the injection moulding method.

5. Optical sensor according to Claim 1, **characterized in that** in the mounted state the moisture sensor (18) is pressed against the inner windscreen with the aid of a spring (19) that is supported on the housing by way of the circuit board.

6. Driver assist device having an optical sensor (1) according to any one of the preceding claims.

7. Vehicle having an optical sensor according to any one of the preceding Claims 1 to 5, wherein the optical sensor for detecting the wetting of the windscreen of the motor vehicle and/or for detecting the ambient light of the motor vehicle, in particular the optical sensor is arranged on the inner face of the windscreen.

## Revendications

1. Capteur optique pour véhicules automobiles, comprenant un capteur optique pour détecter si un pare-brise du véhicule automobile est mouillé et/ou pour détecter la lumière environnante du véhicule automobile, dans lequel le capteur optique est monté sur une carte principale (10) qui peut être montée à proximité du côté intérieur du pare-brise, et comprenant un capteur d'humidité (18) pour détecter l'humidité et/ou la température du côté intérieur du pare-brise, dans lequel le capteur d'humidité (18) est monté à une extrémité d'une carte de circuit imprimé et est pressé, à l'état monté, contre le côté intérieur du pare-brise, dans lequel le capteur d'humidité (18) est couplé électriquement au capteur optique et est enfermé partiellement avec le capteur optique dans un boîtier commun,
**caractérisé en ce que** l'extrémité (15) de la carte de circuit imprimé qui porte le capteur d'humidité est une carte de circuit imprimé rigide-flexible qui est réalisée d'une seule pièce avec la carte principale (10) du capteur optique et qui comporte une partie flexible (17), et **en ce que** l'extrémité rigide-flexible (15) peut être produite à partir de la carte principale (10) en faisant en sorte que des couches de la carte principale (10) soient fraisées de manière correspondante à ladite extrémité ou soient gravées en utilisant des produits chimiques ou soient enlevées par un procédé optique, de manière à ce que le reste du matériau ait une certaine flexibilité le long d'un axe principalement perpendiculaire à la carte principale (10).

2. Capteur optique selon la revendication 1, **caractérisé en ce que** la carte principale du capteur optique comporte, à l'extrémité tournée à l'opposé du capteur d'humidité, un connecteur directement enfichable solidaire de la carte principale pour établir un contact électrique entre le capteur optique et le système électrique du véhicule automobile.

3. Capteur optique selon la revendication 1, **caractérisé en ce que** le boîtier commun est formé de deux parties.

4. Capteur optique selon la revendication 3, **caractérisé en ce que** le boîtier commun peut être fabriqué par moulage par injection.

5. Capteur optique selon la revendication 1, **caractérisé en ce que** le capteur d'humidité (18) est pressé contre le pare-brise intérieur par l'intermédiaire de la carte de circuit imprimé à l'état monté, de manière supportée par le boîtier à l'aide d'un ressort (19).

6. Dispositif d'assistance au conducteur comprenant un capteur optique (1) selon l'une des revendications précédentes.

7. Véhicule automobile comprenant un capteur optique selon l'une des revendications 1 à 5 précédentes, dans lequel le capteur optique est conçu pour détecter si le pare-brise du véhicule automobile est mouillé et/ou pour détecter la lumière environnante du véhicule automobile, le capteur optique étant en particulier disposé sur le côté intérieur du pare-brise.
